# DEMANDE DE BREVET EUROPEEN

(11) **EP 1 394 517 A1**
(43) Date de publication de la demande: **03.03.2004**
(21) Numéro de dépôt: 03291962.3
(22) Date de dépôt: 05.08.2003
(51) Int. Cl.: G01F 11/24

(54) **Machine doseuse à barillet**

(30) Priorité: 21.08.2002 FR 0210444
(71) Demandeur: Tremark Technologies Inc., Mont Saint Hilaire, Quebec J3H 5M8 (CA)
(72) Inventeur: Marchadour, Jean-Charles, 29120 Pont-l'Abbe (FR)
(74) Mandataire: Jaunez, Xavier

(57) **Abrégé**

Machine doseuse comportant un bâti (1) sur lequel est montée une trémie (2) qui est agencée pour recevoir un produit à doser et qui possède un fond (4) à proximité duquel débouche au moins un conduit (7) d'alimentation en produit d'un dispositif de dosage, et au moins un barillet (15).

Conformément à l'invention, le barillet (15) est monté sur le bâti pour pivoter autour d'un axe sensiblement perpendiculaire au conduit d'alimentation pour amener la chambre (20) dudit barillet dans une position d'aspiration en alignement avec le conduit d'alimentation et dans une position de refoulement décalée angulairement par rapport audit conduit d'alimentation. Le moyeu central du barillet (15) est en outre équipé d'un piston d'aspiration (23) et d'un piston de refoulement (24) qui coulissent entre une position sortie dans la chambre (20) en regard et une position dégagée de ladite chambre.

## Description

### DOMAINE DE L'INVENTION

La présente invention concerne une machine doseuse utilisable dans les installations d'emballage ou de conditionnement notamment pour la mise en boîte de produits alimentaires consistants tels que des chairs, des pâtés, du corned beef, de la choucroute, des épinards en branche, du choux... et des produits se présentant sous la forme d'agglomérats pâteux tels que des carottes râpées avec ou sans jus.

### ARRIERE-PLAN DE L'INVENTION

Une machine doseuse comprend généralement un bâti sur lequel sont montés une trémie destinée à recevoir en vrac les produits à mettre en boîte, un conduit débouchant dans la trémie à proximité d'un fond de celle-ci et recevant une partie d'une vis de transfert s'étendant le long du fond de la trémie, et un cylindre de dosage qui reçoit à coulissement un piston d'aspiration et de refoulement. Pour des raisons d'encombrement, le cylindre de dosage est disposé horizontalement sous la trémie. Le fond de la trémie et le conduit sont inclinés par rapport à l'horizontale de telle manière que le cylindre et le conduit sont raccordés par une vanne à tournant en formant entre eux un angle aigu. Ce type de machine n'est pas adapté à tous les produits car certains de ceux-ci, notamment les carottes râpées et les produits collants, tendent à former un bouchon à proximité de la vanne à tournant. Si ce bouchon n'est pas détecté à temps et que la vis de transfert n'est pas stoppée, l'effort résistant au mouvement des produits s'accroît du fait du bouchon et augmente les sollicitations mécaniques subies par la vis de transfert ainsi que par les organes d'entraînement de celle-ci. Ceci risque de détériorer un ou plusieurs des composants de la machine. Par ailleurs, les produits fragiles comportant des morceaux risquent d'être partiellement désagrégés ou écrasés lors du passage du coude.

L'état de la technique est illustré par le document DE-A-35 11 288, qui décrit une machine de dosage comportant une trémie à la base de laquelle est agencé un système de dosage à barillet tournant. Le barillet comporte des chambres radiales dans chacune desquelles est monté un piston coulissant, dont le mouvement est commandé par une came fixe avec laquelle coopère un galet solidaire du piston. Il est à noter que le barillet tourne autour d'un axe horizontal, et le remplissage de chaque chambre s'effectue par gravité. Il est d'ailleurs prévu une remontée du piston au niveau d'une roue à palettes pour doser le volume de poudre.

Dans une telle machine de dosage, les pistons mobiles restent dans les chambres associées lorsque le barillet tourne, ce qui aboutit à un équipage mobile de poids important nécessitant une motorisation de puissance élevée pour son entraînement en rotation.

On pourra également se référer au document JP-A-2001 317979 qui décrit une machine de dosage à cylindres coulissants et expulsion des doses.

### OBJET DE L'INVENTION

L'invention a pour but de proposer une machine doseuse ne présentant pas les inconvénients et limitations des machines antérieures précitées, et en particulier une machine qui soit adaptée à des produits difficiles à doser, comme les carottes râpées ou les produits collants, ou à des produits fragiles en morceaux.

### DEFINITION GENERALE DE L'INVENTION

Le problème précité est résolu conformément à l'invention grâce à une machine doseuse comportant un bâti sur lequel est montée une trémie qui est agencée pour recevoir un produit à doser et qui possède un fond à proximité duquel débouche au moins un conduit d'alimentation en produit d'un dispositif de dosage, et au moins un barillet qui comporte au moins une chambre radiale débouchant en périphérie du barillet, ladite machine doseuse étant remarquable en ce que le barillet est monté sur le bâti pour pivoter autour d'un axe sensiblement perpendiculaire au conduit d'alimentation pour amener la chambre dans une position d'aspiration en alignement avec le conduit d'alimentation et dans une position de refoulement décalée angulairement par rapport audit conduit d'alimentation, ledit bâti comprenant un moyeu central fixe sur lequel est montée une couronne tournante dans laquelle la chambre est ménagée radialement pour déboucher sur une circonférence interne et une circonférence externe de la couronne, et en ce que le barillet comporte des moyens d'aspiration du produit à doser dans la chambre et de refoulement du produit hors de la chambre, lesdits moyens comprenant un piston d'aspiration monté sur le moyeu pour coulisser en alignement avec le conduit d'alimentation entre une position sortie dans la chambre en regard et une position dégagée de la chambre, et un piston de refoulement monté sur le moyeu pour coulisser selon une direction décalée angulairement avec le conduit d'alimentation entre une position sortie dans la chambre en regard et une position dégagée de la chambre en regard.

Ainsi, le trajet des produits entre la trémie et la chambre de dosage est rectiligne, ce qui limite les risques de formation de bouchons avec des produits collants, ou de dégradation des produits avec des produits fragiles en morceaux. De plus, les moyens d'aspiration et de refoulement sont montés sur une partie fixe par rapport au bâti. Il est alors plus facile de les relier à une source d'énergie et la structure du barillet est relativement simple et de poids minimal.

Avantageusement, il est prévu qu'en position sortie, le piston de refoulement a une face avant affleurant la circonférence externe de la couronne. Ceci procure une précision optimale pour le volume dosé.

De préférence, la couronne comprend plusieurs chambres agencées de telle manière que lorsqu'une des chambres est en regard du piston d'aspiration, une autre des chambres est en regard du piston de refoulement. La machine doseuse permet alors l'obtention de cadences élevées améliorant la productivité.

Avantageusement, les pistons sont associés à des moyens de leur actionnement simultané entre leurs positions sortie et dégagée et, de préférence, les moyens d'actionnement comprennent deux crémaillères solidaires chacune d'un des pistons et un pignon qui engrène sur les crémaillères et qui est relié à un arbre de sortie d'un moteur. Les moyens d'actionnement ont ainsi une structure particulièrement simple.

Selon une caractéristique particulière, le barillet est monté sur le bâti pour être mobile entre une position active dans laquelle la chambre est en regard du conduit d'alimentation et une position inactive dans laquelle le barillet est écarté du conduit d'alimentation. Le nettoyage de la machine est de la sorte considérablement facilité lorsque le barillet est en position inactive.

Avantageusement enfin, le barillet est monté sur le bâti pour pivoter de façon excentrée entre les positions active et inactive autour d'un axe sensiblement parallèle à un diamètre du barillet et perpendiculaire au conduit d'alimentation.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :

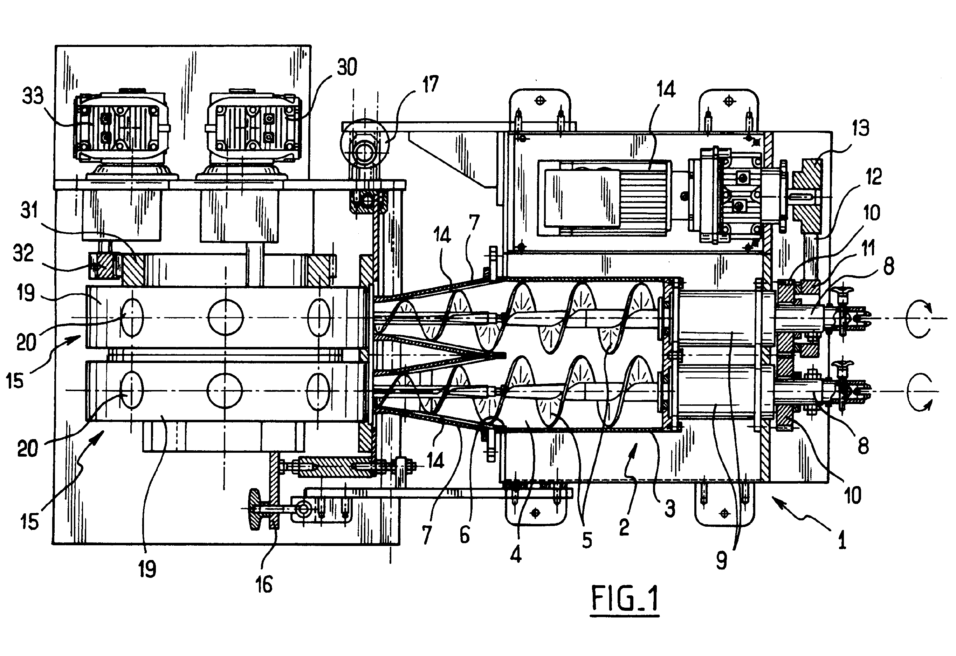

- la figure 1 est une vue schématique de dessus en coupe partielle d'une machine de dosage conforme à l'invention,

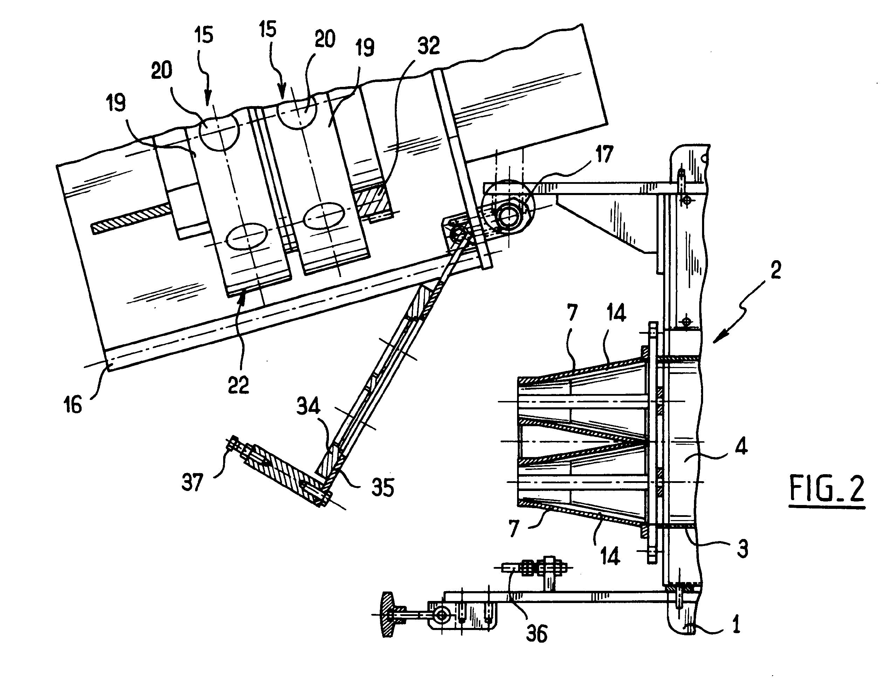

- la figure 2 est une vue partielle de dessus, en coupe partielle, d'une machine de dosage selon l'inventions les barillets étant en position inactive,
- la figure 3 est une vue en coupe selon la ligne III-III de la figure 1 d'un barillet dont les pistons sont en position sortie,
- la figure 4 est une vue analogue à la figure 3 du barillet, les pistons du barillet étant en position rentrée.

### DESCRIPTION DETAILLEE DE L'INVENTION

En référence aux figures, la machine doseuse conforme à l'invention comprend un bâti 1 sur lequel est montée une trémie généralement, désignée en 2, d'axe vertical et destinée à recevoir en vrac les produits à doser puis à mettre en boîte. La trémie 2 comporte une cuve 3 (qui est la seule partie de la trémie 2 à être visible sur les figures) délimitée par une paroi latérale dont une extrémité est obturée par un fond 4 horizontal et une extrémité opposée est surmonté par un entonnoir éventuellement relié au bâti 1 par une articulation pour basculer autour d'un axe horizontal perpendiculaire à l'axe de la trémie 2 entre une position en appui contre la cuve 3 et une position dégagée vers l'arrière par rapport à la cuve 3.

Deux vis de transfert 5 s'étendent horizontalement au fond de la cuve 3. Chaque vis de transfert 5 possède, par référence à un sens de transfert des produits, une extrémité aval passant par une ouverture 6 pratiquée dans la paroi latérale de la cuve 3 pour s'étendre en saillie de la cuve 3 dans un conduit 7 horizontal qui débouche à proximité du fond 4 de la cuve 3 et une extrémité amont solidaire d'une extrémité d'un arbre 8 qui traverse la paroi latérale de la cuve 3 et qui est reçu dans un palier 9 monté à l'extérieur de la cuve 3. Les arbres 8 ont des extrémités opposées aux vis de transfert 5 qui sont équipées de pignons 10 engrenant l'un avec l'autre et l'un des arbres 8 est en outre pourvu sur cette extrémité d'une poulie menée 11 reliée par l'intermédiaire d'une courroie 12 à une poulie menante 13 reliée à un arbre de sortie d'un servomoteur 14.

Chaque conduit 7 a une surface interne enveloppant l'extrémité aval de la vis de transfert 5 correspondante. Des rainures axiales 14 sont toutefois ménagées dans cette surface interne afin de constituer un obstacle à la rotation des produits autour de l'axe de la vis de transfert 5 de manière à favoriser un déplacement axial de ces produits.

La machine doseuse comprend en outre un dispositif de dosage comportant deux barillets généralement désignés en 15 qui sont montés sur un carter 16 relié au bâti 1 par l'intermédiaire d'une articulation 17 pour pivoter de façon excentrée dans un plan horizontal entre une position active dans laquelle les barillets 15 sont en regard des conduits 6 et une position inactive dans laquelle les barillets 15 sont écartés des conduits 6 de manière à libérer l'accès à ces derniers.

Chaque barillet 15 comprend un moyeu 18 qui est fixé au carter 16 et une couronne 19 qui est montée sur le moyeu 18 pour pivoter autour d'un axe horizontal perpendiculaire aux axes des conduits 6 lorsque le carter est en position active.

La couronne 19 comporte des chambres 20 qui s'étendent radialement pour déboucher d'une part sur une circonférence interne 21 de la couronne 19 et d'autre part sur une circonférence externe 22 de la couronne 19. Les chambres 20 sont ici au nombre de huit à 45° les unes des autres. Le nombre de chambres 20 peut toutefois être différent de huit.

Le dispositif de dosage comprend également des moyens d'aspiration du produit à doser dans les chambres 20 et des moyens de refoulement du produit hors des chambres 20.

Ces moyens d'aspiration et de refoulement comprennent un piston d'aspiration 23 monté sur le moyeu 18 pour coulisser en alignement avec le conduit 6 entre une position sortie dans la chambre 20 en regard et une position dégagée de la chambre 20 en regard et un piston de refoulement 24 monté sur le moyeu 18 pour coulisser selon une direction décalée de 90° par rapport au piston d'aspiration 23 entre une position sortie dans la chambre 20 en regard et une position dégagée de la chambre 20 en regard. Les pistons 23, 24 ont une face avant 25, 26 qui affleure en position sortie la circonférence externe 22 de la couronne 19 et en position dégagée la circonférence interne 21 de la couronne 19. On remarque que l'angle entre le piston d'aspiration 23 et le piston de refoulement 24 est un multiple de l'angle séparant les chambres 20 de sorte que, lorsqu'une des chambres 20 est en regard du piston d'aspiration 23, une autre des chambres 20 est en regard du piston de refoulement 24.

Chaque piston 23, 24 est solidaire d'une crémaillère 27, 28 sur lesquels engrène un pignon 29 qui s'étend transversalement dans les moyeux 18 et qui est relié à un moteur d'entraînement 30. On notera que pour permettre aux crémaillères 27, 28 d'engrener sur le même pignon 29, les crémaillères 27, 28 sont montées selon deux plans différents parallèles.

Les couronnes 19 des barillets 15 sont ici liées en rotation et sont entraînées par l'intermédiaire d'une couronne dentée 31 sur laquelle engrène un pignon 32 relié à l'arbre de sortie d'un moteur 33.

Lorsque le carter 16 est en position active, des éléments d'étanchéité 34 sont pressés entre le contour externe 22 de la couronne 19 et l'extrémité libre des conduits 6. Les éléments d'étanchéité 34 sont solidaires d'un élément support 35 monté pour pivoter sur le carter 16. L'élément support 35 comporte du côté des barillets 15, une surface incurvée épousant le contour externe 22 et du côté des conduits 7 une surface plane. On notera que l'élément support 35, du côté opposé à son axe d'articulation au carter 16, prend appui sur le bâti 1 et sur le carter 16 par des vis de réglage 36, 37 qui s'étendent sensiblement parallèlement aux axes des conduits 7 lorsque le carter 16 est en position active. Ceci permet de régler l'effort d'écrasement qui s'exerce sur les éléments d'étanchéité 34 en formant une entretoise de longueur réglable entre le carter 16 et le bâti 1.

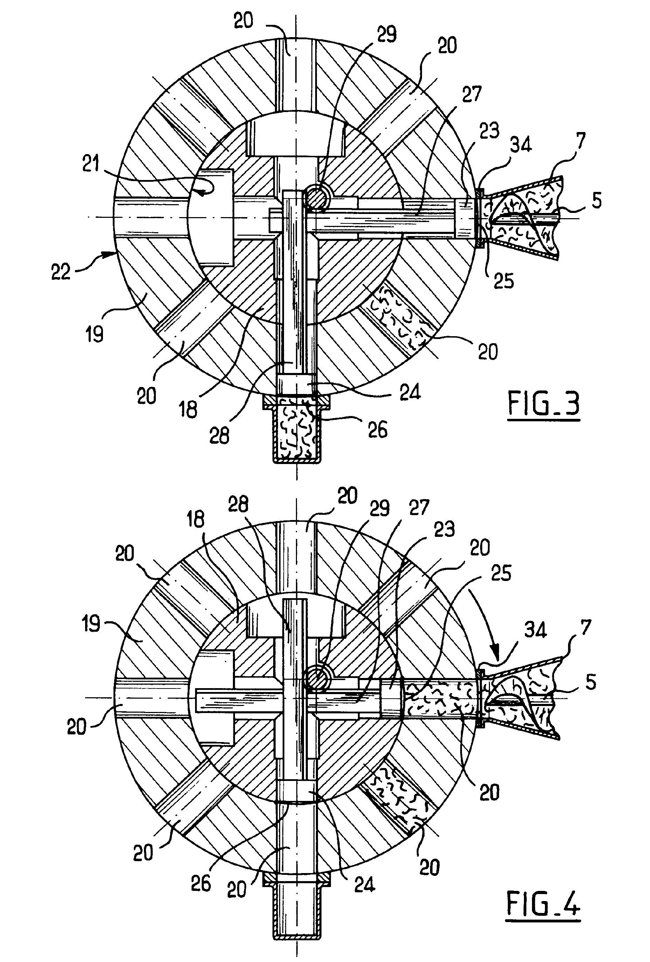

En fonctionnement, dans chaque barillet 15, les pistons 23, 24 étant en position sortie (figure 3), le pignon 29 est actionné pour amener les pistons 23, 24 en position dégagée. Du produit provenant des conduits 7 est alors aspiré dans la chambre 20 dans laquelle coulisse le piston d'aspiration (voir la figure 3).

Une fois les pistons 23, 24 en position dégagée, la couronne 19 pivote de 45° de manière à amener une chambre 20 vide en regard du piston d'aspiration 23 et une chambre 20 pleine en regard du piston de refoulement (voir la figure 4).

Les pistons 23, 24 sont alors amenés dans leur position sortie. Le piston de refoulement 24 chasse alors le produit contenu dans la chambre 20 en regard dans une boîte supportée par un dispositif d'amenée des boîtes non visible aux figures tandis que le piston d'aspiration 23 est amené dans sa position sortie pour préparer la prochaine aspiration de produit (voir figure 3).

Les pistons 23, 24 sont ensuite ramenés en position dégagée pour aspirer du produit dans la chambre 20 en regard du conduit 7 puis permettre la rotation de la couronne 19. Le cycle se poursuit alors comme précédemment décrit.

On remarque que le fait que la face avant 25 du piston d'aspiration 23 affleure la circonférence interne 21 de la couronne 19 permet de limiter au maximum les rétentions de produits à ce niveau lors de la rotation de la couronne 19. L'affleurement de la face avant 26 du piston de refoulement 24 sur la circonférence externe 22 de la couronne 19 permet d'évacuer la totalité de la chambre 20 dans la boîte.

Pour procéder au nettoyage des conduits 6, le carter 16 est amené dans sa position active, de même que l'élément support 35 des moyens d'étanchéité 34.

Bien entendu, l'invention n'est pas limitée au mode de réalisation décrit et on peut y apporter des variantes de réalisation sans sortir du cadre de l'invention tel que défini par les revendications.

En particulier, un piston peut être associé à chaque chambre pour assurer l'aspiration et le refoulement du produit.

En outre, les moyens d'actionnement des pistons peuvent être indépendants pour chaque piston et peuvent être électriques, hydrauliques ou pneumatiques.

Par ailleurs, la quantité à doser peut être inférieure au volume de la chambre 20.

## Revendications

1. Machine doseuse comportant un bâti (1) sur lequel est montée une trémie (2) qui est agencée pour recevoir un produit à doser et qui possède un fond (4) à proximité duquel débouche au moins un conduit (7) d'alimentation en produit d'un dispositif de dosage, et au moins un barillet (15) qui comporte au moins une chambre (20) radiale débouchant en périphérie du barillet, **caractérisée en ce que** le barillet (15) est monté sur le bâti (1) pour pivoter autour d'un axe sensiblement perpendiculaire au conduit d'alimentation pour amener la chambre (20) dans une position d'aspiration en alignement avec le conduit d'alimentation (7) et dans une position de refoulement décalée angulairement par rapport audit conduit d'alimentation, ledit bâti comprenant un moyeu central fixe (18) sur lequel est montée une couronne tournante (19) dans laquelle la chambre (20) est ménagée radialement pour déboucher sur une circonférence interne (21) et une circonférence externe (22) de la couronne, et **en ce que** le barillet (15) comporte des moyens (23, 24) d'aspiration du produit à doser dans la chambre et de refoulement du produit hors de la chambre, lesdits moyens comprenant un piston d'aspiration (23) monté sur le moyeu (18) pour coulisser en alignement avec le conduit d'alimentation entre une position sortie dans la chambre en regard et une position dégagée de la chambre, et un piston de refoulement (24) monté sur le moyeu pour coulisser selon une direction décalée angulairement avec le conduit d'alimentation entre une position sortie dans la chambre en regard et une position dégagée de la chambre en regard.

2. Machine doseuse selon la revendication 1, **caractérisée en ce que**, en position sortie, le piston de refoulement (24) a une face avant (26) affleurant la circonférence externe (22) de la couronne (19).

3. Machine doseuse selon la revendication 1 ou la revendication 2, **caractérisée en ce que**, en position dégagée, le piston d'aspiration (23) a une face avant (25) affleurant la circonférence interne (21) de la couronne (19) .

4. Machine doseuse selon l'une quelconque des revendications 1 à 3, **caractérisée en ce que** la couronne (19) comprend plusieurs chambres (20) agencées de telle manière que lorsqu'une des chambres est en regard du piston d'aspiration (23), une autre des chambres est en regard du piston de refoulement (24).

5. Machine doseuse selon la revendication 4, **caractérisée en ce que** les pistons (23, 24) sont associés à des moyens (27, 28, 29, 30) de leur actionnement simultané entre leurs positions sortie et dégagée.

6. Machine doseuse selon la revendication 5, **caractérisée en ce que** le moyens d'actionnement comprennent deux crémaillères (27, 28) solidaires chacune d'un des pistons (23, 24) et un pignon (29) qui engrène sur les crémaillères et qui est relié à un arbre de sortie d'un moteur (30).

7. Machine doseuse selon la revendication 1, **caractérisée en ce que** le barillet (15) est monté sur le bâti (1) pour être mobile entre une position active dans laquelle la chambre (20) est en regard du conduit d'alimentation (7) et une position inactive dans laquelle le barillet (15) est écarté du conduit d'alimentation (7).

8. Machine doseuse selon la revendication 7, **caractérisée en ce que** le barillet (15) est monté sur le bâti (1) pour pivoter de façon excentrée entre les positions active et inactive autour d'un axe sensiblement parallèle à un diamètre du barillet et perpendiculaire au conduit d'alimentation (7).
